# EUROPEAN PATENT SPECIFICATION

(11) **EP 2 050 949 B1**
(45) Date of publication and mention of the grant of the patent: **14.07.2010**
(21) Application number: 08164887.5
(22) Date of filing: 23.09.2008
(51) Int. Cl.: F02M 25/07, F02B 31/06

(54) **Device for swirling and mixing exhaust gases**
Vorrichtung zur Verwirbelung und Vermischung von Abgas
Dispositif de mise en tourbillonement et de mélange de gaz d'échappement

(30) Priority: 25.09.2007 FR 0757816
(43) Date of publication of application: 22.04.2009
(73) Proprietor: MANN+HUMMEL GmbH, 71638 Ludwigsburg (DE)
(72) Inventor: Marimbordes, Thierry, Dr., 53170 Bazougers (FR); Pascal Noiseau, 53410 Saint Ouen des Toits (FR)

(56) References cited:
- EP-A- 1 783 341
- EP-A- 1 826 391
- DE-A1- 19 607 811
- FR-A- 2 040 559
- JP-A- 61 040 435
- US-A- 4 066 721
- US-A- 4 461 150
- US-A1- 2006 060 172

## Description

The present invention relates to a device for swirling and mixing the exhaust gases recycled in the intake duct of an internal combustion engine via a recycling conduit, substantially perpendicularly to the longitudinal axis of said intake duct.

It is normal to recycle some of the exhaust gases of an internal combustion engine towards the cylinders of said engine.

The exhaust gases recycled in this manner, known as EGRs, are gases produced by the previous combustion cycles and are thus depleted in oxygen.

Generally, they are introduced into the intake duct of the internal combustion engine via a recycling conduit.

A system of this type slows down combustion of the mixture in the combustion chambers of the internal combustion engine and absorbs some of the heat, which reduces the combustion temperature.

In addition, it limits the presence of oxygen in the cylinders.

These two effects lead to a reduction of nitrogen oxides NOₓ.

The document JP 61-040435 A2 shows two throttle valves disposed in an intake-air pipe, wherein the throttle valves rotate about shafts in opposite directions to each other and wherein sector gears are attached to the shafts.
The document DE 196 07 811 A1 describes an exhaust gas recirculation valve having a valve member that cooperates with a valve seat of a connection neck of an exhaust gas recirculation line, wherein a throttle valve is disposed adjacent the exhaust gas recirculation valve.
The US patent US 5,975,064 shows an exhaust gas recirculation valve having a valve member that cooperates with a valve seat of a connection neck of an exhaust gas recirculation line, wherein the neck protrudes into a tube of the intake system and the valve seat points toward the inlet side of the exhaust gas recirculation line.

However, in order for a system of this type to function in a satisfactory manner, the mixture of air and recycled burned gases must be as homogeneous as possible.

The invention thus relates to a device for swirling and mixing the exhaust gases recycled in the intake duct of an internal combustion engine, making it possible to control homogenisation of the mixture of air and recycled exhaust gases which circulates in this pipeline.

According to the invention, a device of this type is characterised in that it is formed of two control flaps in the form of toroidal portions mounted rotatably on the inner part of the intake duct, and also of an actuator which makes it possible to control the rotation of said control flaps.

The hinge pins of the two control flaps are substantially perpendicular to the longitudinal axis of the intake duct as well as to the axis of introduction of the recycled exhaust gases into said duct via the recycling conduit.

According to the invention, the control flaps are displaceable in rotation between, on the one hand, a rest position in which they are retracted along the inner wall of the intake duct so as to expose the entire cross-section of said intake duct and, on the other hand, an active position in which they are pulled towards one another so as to reduce said cross-section.

The actuator, which may for example be controlled mechanically, pneumatically or electrically, ensures that displacement of the control flaps between the active position and the rest position thereof is controlled as a function of the pressure of the recycled burned gases introduced into the intake duct via the recycling conduit.

More precisely, in the absence of recycled burned gases or when the pressure of these gases is lower than a predetermined threshold value, the actuator controls the control flaps so they remain in the rest position.

In contrast, when this pressure increases, the actuator controls said flaps so they are displaced towards the active position, in which the exposed cross-section is generally reduced to approximately 30 % of the nominal cross-section of the intake duct.

In an active position, the control flaps act like the blades of a turbine to swirl the mixture of air and recycled burned gases and, consequently, enable this mixture to be homogenised quickly, the mixture then optionally being transferred towards an air distributor.

The shape of these flaps is of course adapted to the requirements in each case.

According to a particularly advantageous feature of the invention, the inner wall of the intake duct comprises cavities in which the control flaps are arranged in the rest position thereof.

Consequently, in said rest position, that is to say in the absence or near absence of recycled exhaust gases, the presence of control flaps does not lead to any loss of pressure in the air flow drawn into the intake duct.

In accordance with the invention, the control flaps are preferably mounted jointly in rotation.

Consequently, their hinge pins may advantageously each be fitted with toothed portions which engage in one another during displacement of said flaps between the active position and rest position thereof.

These toothed portions are generally also arranged in the cavities formed in the inner wall of the intake duct.

Taking into account this configuration, only the end which is held directly or indirectly by the actuator, of one of the hinge pins of the control flaps or engine shaft, projects from the outer part of the intake duct.

The second hinge pin which is driven by said engine shaft by means of the toothed portions is arranged entirely in the inner part of the intake duct.

According to the invention, the control flaps are preferably mounted after the recycling conduit in the direction of circulation of the air flow drawn into the intake duct.

However, these control flaps may also be mounted before said conduit without departing from the scope of the invention.

The features of the device for swirling and mixing recycled exhaust gases inside the intake duct of an internal combustion engine will now be described in greater detail and with reference to the accompanying drawings, given by way of non-limiting example, in which:
- Fig. 1 is a cross-section of the intake duct showing the control flaps in the rest position,
- Fig. 2 is a cross-section of the intake duct similar to that of Fig. 1 but showing the control flaps in the active position,
- Fig. 3 is a perspective view of the intake duct showing the shaft for controlling the control flaps.

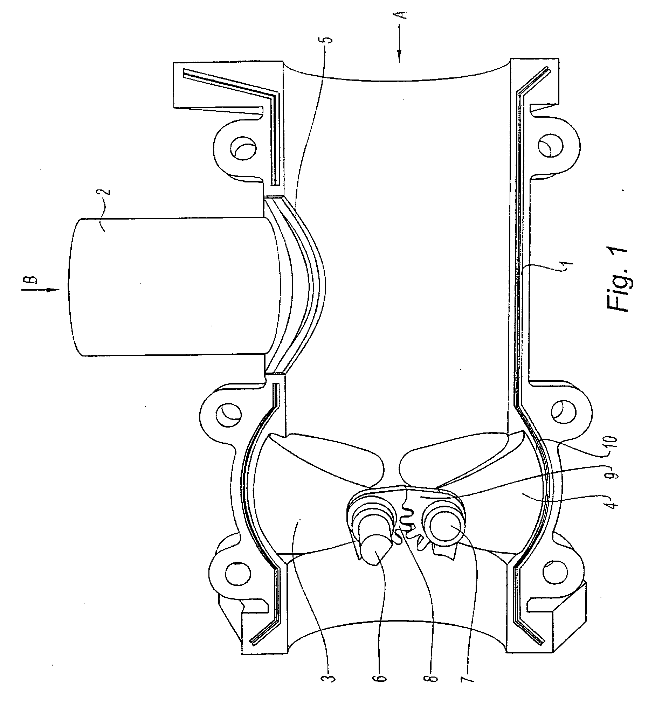

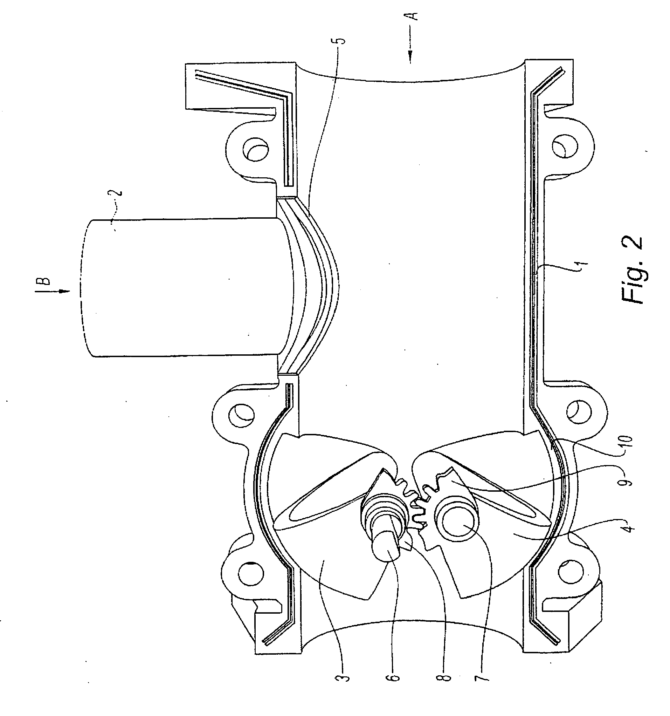

According to Fig. 1 and 2, an air flow indicated by the arrow A circulates inside the intake duct 1 of an internal combustion engine so as to be transferred towards the cylinders of said engine.

Some of the exhaust gases of said engine, generally corresponding to between 5 and 35 % of these gases, are recycled inside the intake duct 1 via a recycling conduit 2 according to the arrow B.

The axis of introduction B of the recycled exhaust gases into the intake duct 1 is perpendicular to the longitudinal axis A of said conduit.

According to Fig. 1 and 2, two control flaps 3, 4 are mounted on the inner part of the intake duct 1 after the feed opening 5 of the exhaust gases recycled via the recycling conduit 2.

These two control flaps 3, 4 which are in the form of toroidal portions are mounted jointly in rotation about parallel hinge pins 6, 7 respectively.

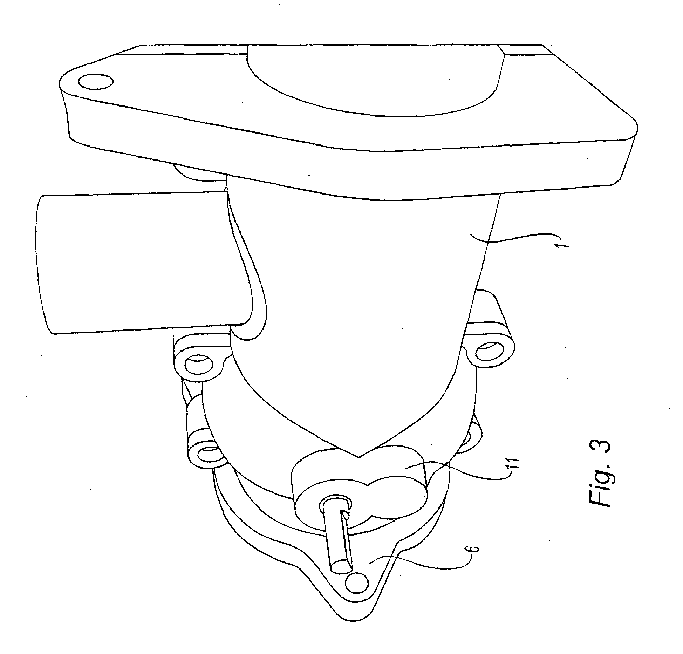

According to Fig. 1, 2 and 3, one of these axes of articulation 6 which corresponds to an engine shaft projects from the outer part of the intake duct 1, as shown in Fig. 3. Said engine shaft is driven directly or indirectly by an actuator not shown in the figures.

The second hinge pin 7 is driven by the engine shaft 6 by means of two toothed portions 8, 9 fixed jointly to said pin and shaft respectively, which portions engage in one another during rotation thereof.

The control flaps 3, 4 may also be displaced between a rest position shown in Fig. 1 in which they are retracted along the inner wall of the intake duct 1 and an active position shown in Fig. 2 in which they are pulled towards one another.

This displacement of the control flaps 3, 4 between these two positions is controlled by the actuator (not shown in the figures) as a function of the pressure of the exhaust gases recycled according to the arrow B in the intake duct 1 via the recycling conduit 2.

According to Fig. 1, when the pressure of the recycled exhaust gases is lower than a predetermined threshold, the actuator controls the control flaps 3, 4 so as to be positioned in the rest position in order to expose the entire cross-section of the intake duct 1, as shown in Fig. 1.

According to Fig. 2, when the pressure of the recycled exhaust gases increases, the actuator controls the control flaps 3, 4 so they are displaced towards the active position in order to reduce said cross-section.

In the active position, the control flaps 3, 4 cause the mixture of air and recycled exhaust gases to swirl and circulate within the inner part of the intake duct 1, and this leads to homogenisation of this mixture.

According to Fig. 1 and 2, the inner wall of the intake duct 1 comprises cavities 10 in which the control flaps 3, 4 are arranged in the rest position thereof, as shown in Fig. 1, in such a way that there is no loss of pressure in the gaseous flow circulating inside the intake duct 1 in the direction of arrow A.

According to Fig. 3 and for a similar reason, the toothed portions 8, 9 are also arranged in cavities 11 formed in the inner wall of the intake duct 1.

## Claims

1. Device for swirling and mixing recycled exhaust gases inside the intake duct (1) of an internal combustion engine via a recycling conduit (2), substantially perpendicularly to the longitudinal axis of said intake duct, **characterised in that** it is formed of two control flaps (3, 4) in the form of toroidal portions, mounted rotatably on the inner part of the intake duct (1), about hinge pins (6, 7) substantially perpendicular to the longitudinal axis of said intake duct (1) as well as to the axis of introduction of the exhaust gases recycled in said duct, said control flaps (3, 4) being displaceable in rotation between, on the one hand, a rest position in which they are retracted along the inner wall of the intake duct (1) so as to expose the entire cross-section of said duct and, on the other hand, an active position in which they are pulled towards one another so as to reduce said cross-section, and also formed of an actuator which makes it possible to control displacement of the control flaps (3, 4) between the active position and the rest position as a function of the pressure of the recycled exhaust gases introduced into the intake duct (1) via the recycling conduit (2), wherein the inner wall of the intake duct (1) comprises cavities (10) in which the control flaps (3, 4) are arranged in the rest position thereof.

2. Device according to claim 1, **characterised in that** the control flaps (3, 4) are mounted together in rotation.

3. Device according to claim 2, **characterised in that** the hinge pins (6, 7) of the control flaps (3, 4) are each fitted with toothed portions (8, 9) which engage with one another during displacement of said flaps between the active position and rest position thereof.

4. Device according to any one of claims 1 to 3, **characterised in that** the control flaps (3, 4) are arranged after the recycling conduit (2) in the direction of circulation of the air flow drawn into the intake duct (1).

5. Device according to any one of claims 1 to 3, **characterised in that** the control flaps (3, 4) are arranged before the recycling conduit (2) in the direction of circulation of the air flow drawn into the intake duct (1).

## Patentansprüche

1. Vorrichtung zum Verwirbeln und Mischen von wiederaufbereiteten Abgasen im Ansaugkanal (1) einer Brennkraftmaschine über eine Abgasrückführleitung (2), die im Wesentlichen senkrecht zur Längsachse des Ansaugkanals verläuft, **dadurch gekennzeichnet, dass** sie aus zwei ringförmigen Steuerklappen (3, 4) gebildet ist, die drehbar auf der Innenseite des Ansaugkanals (1) montiert sind, an im Wesentlichen senkrecht zur Längsachse des Ansaugkanals (1) verlaufenden Scharnierbolzen (6, 7) sowie zur Achse der in dem Kanal wiederaufbereiteten eingeführten Abgase, wobei die Steuerklappen (3, 4) verstellbar durch Drehung zwischen einerseits einer Ruheposition, in der sie entlang der Innenwand des Ansaugkanals (1) zurückgestellt werden, so dass der gesamte Querschnitt des Kanals freiliegt und andererseits einer Wirkposition, in der sie gegeneinander gezogen werden, um so den Querschnitt zu verringern, und ebenfalls aus einem Stellglied gebildet ist, welches es ermöglicht, die Verstellung der Steuerklappen (3, 4) zwischen einer Wirkposition und einer Ruheposition als eine Funktion des Drucks der in den Ansaugkanal (1) über die Abgasrückführleitung (2) eingeführten wiederaufbereiteten Abgase zu steuern, wobei die Innenwand des Ansaugkanals (1) Hohlräume (10) beinhaltet, in welchen die Steuerklappen (3, 4) in Ruheposition angeordnet sind.

2. Vorrichtung nach Anspruch 1, **dadurch gekennzeichnet, dass** die Steuerklappen (3, 4) zusammen drehbar montiert sind.

3. Vorrichtung nach Anspruch 2, **dadurch gekennzeichnet, dass** jeder der Scharnierbolzen (6, 7) der Steuerklappen (3, 4) mit verzahnten Abschnitten (8, 9) montiert ist, die während der Verstellung der Klappen zwischen einer Wirkposition und einer Ruheposition ineinandergreifen.

4. Vorrichtung nach einem der Ansprüche 1 bis 3, **dadurch gekennzeichnet, dass** die Steuerklappen (3, 4) nach der Abgasrückführleitung (2) in Umwälzrichtung des in den Ansaugkanal (1) angesaugten Luftstroms angeordnet sind.

5. Vorrichtung nach einem der Ansprüche 1 bis 3, **dadurch gekennzeichnet, dass** die Steuerklappen (3, 4) vor der Abgasrückführleitung (2) in Umwälzrichtung des in den Ansaugkanal (1) angesaugten Luftstroms angeordnet sind.

## Revendications

1. Dispositif pour mettre en tourbillon et mélanger des gaz d'échappement retraités dans le canal d'aspiration (1) d'un moteur à combustion interne par l'intermédiaire d'une conduite de réintroduction des gaz d'échappement (2) qui s'étend pour l'essentiel perpendiculairement à l'axe longitudinal du canal d'aspiration, **caractérisé en ce qu'**il est formé de deux clapets de commande annulaires (3, 4) qui sont montés rotatifs sur la face intérieure du canal d'aspiration (1), sur des boulons de charnière (6, 7) essentiellement perpendiculaires à l'axe longitudinal du canal d'aspiration (1) ainsi qu'à l'axe des gaz d'échappement retraités introduits dans le canal, les clapets de commande (3, 4) étant réglables par rotation entre d'une part une position de repos dans laquelle ils sont ramenés le long de la paroi intérieur du canal d'aspiration (1) de sorte que toute la section transversale du canal est dégagée, et d'autre part une position active dans laquelle ils sont tirés l'un vers l'autre pour réduire ainsi la section transversale, et qu'il est également formé d'un organe de réglage qui permet de commander le déplacement des clapets de commande (3, 4) entre une position active et une position de repos en fonction de la pression des gaz d'échappement retraités introduits dans le canal d'aspiration (1) par la conduite de réintroduction des gaz d'échappement (2), la paroi intérieure du canal d'aspiration (1) contenant des cavités (10) dans lesquelles les clapets de commande (3, 4) sont placés en position de repos.

2. Dispositif selon la revendication 1, **caractérisé en ce que** les clapets de commande (3, 4) sont montés rotatifs ensemble.

3. Dispositif selon la revendication 2, **caractérisé en ce que** les boulons de charnière (6, 7) des clapets de commande (3, 4) sont montés chacun avec des sections dentées (8, 9) qui s'engagent l'une dans l'autre pendant le déplacement des clapets entre une position active et une position de repos.

4. Dispositif selon l'une des revendications 1 à 3, **caractérisé en ce que** les clapets de commande (3, 4) sont placés après la conduite de réintroduction des gaz d'échappement (2) dans la direction de circulation du courant d'air aspiré dans le canal d'aspiration (1).

5. Dispositif selon l'une des revendications 1 à 3, **caractérisé en ce que** les clapets de commande (3, 4) sont placés avant la conduite de réintroduction des gaz d'échappement (2) dans la direction de circulation du courant d'air aspiré dans le canal d'aspiration (1).
